# DEMANDE DE BREVET EUROPEEN

(11) **EP 1 367 472 A1**
(43) Date de publication de la demande: **03.12.2003**
(21) Numéro de dépôt: 02291328.9
(22) Date de dépôt: 30.05.2002
(51) Int. Cl.: G05D 7/01

(54) **Système de régulation de débit pour installation de distribution d'eau**

(71) Demandeur: Colovret, Jean, 28800 Saumeray (FR)
(72) Inventeur: Colovret, Jean, 28800 Saumeray (FR)
(74) Mandataire: Bloch, Gérard

(57) **Abrégé**

Le système de régulation de débit pour un circuit d'alimentation d'eau, notamment pour douche et réservoir de WC, comprend un module d'admission d'eau (6), avec des orifices d'admission (7) et des sorties d'eau (15), et des moyens d'obturation (20) avec une membrane à déroulement (9) pour obturer de façon variable les sorties (15) du module d'admission (6). La membrane à déroulement (9) est soumise, d'un côté (57), à la pression d'arrivée d'eau et, de l'autre côté (58), à la pression d'eau régnant à l'intérieur du module d'admission (6) et à un ressort de rappel taré et de régulation (8). Le module d'admission (6) est fixe dans le système, la membrane d'enroulement (9) est solidaire d'une tête d'arrivée d'eau (56) et d'un module d'obturation (20) monté mobile sous l'action du ressort de rappel (8) et le module d'admission (6) comporte des fentes radiales (15) de sorties d'eau obturables par la membrane (9).

Le système est conçu suivant le principe du fractionnement de la détente et permet un écoulement silencieux avec une régulation d'un débit d'alimentation quelle que soit la pression d'eau du réseau.

## Description

La présente invention concerne les installations de distribution d'eau, notamment pour alimenter une douche ou un réservoir de chasse de WC, en vue d'un fonctionnement silencieux et d'éviter la propagation de vibrations sonores dans les canalisations de l'installation d'alimentation en eau sanitaire et de maintenir un débit constant d'alimentation en eau quelles que soient les variations de pression d'eau du réseau.

Dans les installations classiques, les douches sont alimentées en général par des robinets mélangeurs qui permettent de régler manuellement la température de l'eau ou par des robinets thermostatiques qui règlent automatiquement la température de l'eau. Mais avec tous ces robinets, le réglage du débit de la douche se fait manuellement ce qui signifie que le réglage de débit de la douche est laissé à l'initiative de chaque utilisateur, qui ne possède aucun repère du débit utile, qui devrait se situer entre un débit minimal de confort et un débit maximal économique. De plus, une fois le réglage manuel du débit effectué, ce débit évolue en fonction des variations de la pression du réseau. En général, le débit maximal économique est dépassé, ce qui se traduit par une consommation excessive et inutile.

Quant aux réservoirs de chasse de WC, ils sont alimentés par des robinets avec flotteurs qui ne comportent pas de dispositif de régulation de débit, ce qui a pour inconvénient d'augmenter considérablement le temps de remplissage du réservoir quand la pression d'eau du réseau est faible et que, de ce fait, le débit diminue, ou d'augmenter le niveau sonore de l'installation quand la pression d'eau du réseau est forte et que, de ce fait, le débit augmente.

La plupart de ces installations, avec robinet mélangeur, robinet thermostatique ou robinet à flotteur, engendrent des vibrations sonores en fonctionnement dans l'ensemble de l'installation, avec un bruit qui se propage jusque dans les pièces éloignées. Cette nuisance sonore est particulièrement désagréable dans les immeubles collectifs ou dans les hôtels.

La présente invention a pour premier objectif de réguler le débit d'alimentation en eau et de préférence de le maintenir constant, quelles que soient les variations de pression d'eau du réseau. Le deuxième objectif est de supprimer la nuisance sonore par l'utilisation d'un système silencieux de distribution d'eau.

On connaît par le document US 4 092 998 un système de régulation de débit pour installation de distribution d'eau, pour pallier les variations de pression du réseau d'alimentation en eau, comprenant un module d'admission d'eau en communication avec une arrivée d'eau, avec des orifices d'admission et des sorties d'eau, et des moyens d'obturation avec une membrane à déroulement agencée pour obturer de façon variable les sorties du module d'admission, les moyens d'obturation étant agencés pour que la membrane à déroulement soit soumise, d'un côté, à la pression d'arrivée d'eau et, de l'autre côté, à la pression d'eau régnant à l'intérieur du module d'admission entre les orifices d'admission et les sorties d'eau, d'une part, et à des moyens de rappel élastique tarés et de régulation, d'autre part.

Mais dans ce système de l'art antérieur, les sorties d'eau du module d'admission sont ménagées entre le module d'admission et un autre module de sortie d'eau, la membrane à déroulement étant fixée aux deux modules, si bien que, si, d'un côté, la membrane est bien soumise à la pression d'arrivée, de l'autre côté, elle n'est pas seulement soumise à la pression régnant à l'intérieur du module d'admission et à la force des moyens de rappel, la pression de sortie s'exerçant aussi sur la membrane. De surcroît, ce système ne peut pas assurer un écoulement silencieux.

L'invention de la présente demande vise donc à perfectionner un tel système de l'art antérieur.

A cet effet, elle concerne un régulateur du type défini ci-dessus, caractérisé selon la revendication 1.

De préférence, le module d'admission est un module femelle dans lequel est monté mobile le module femelle d'obturation.

De préférence encore, le module d'admission comporte un manchon mâle monté dans une bague femelle entre lesquels sont ménagées des fentes latérales de sortie d'eau et des orifices traversants axiaux d'admission du module d'admission sont ménagés depuis la face externe du manchon et les fentes radiales s'étendent depuis le bord intérieur du manchon.

Avantageusement, le module d'obturation comporte une portion de tube d'alimentation depuis lequel s'étend une jupe cylindrique de réception d'un ressort de rappel taré de régulation en appui contre le module d'admission.

Avantageusement encore, il est prévu une bague montée sur la portion de tube d'alimentation contre la jupe de réception du ressort et le bord interne de la membrane à enroulement est pincé entre la bague et la jupe et la membrane à enroulement comporte un bord externe pincé entre la bague femelle du module d'admission et la tête d'arrivée d'eau.

L'invention sera mieux comprise à l'aide de la description suivante de deux formes de réalisation du système de l'invention, en référence au dessin annexé, sur lequel
- la figure 1 est une vue en coupe du système, pour alimenter une douche ;
- la figure 2 est une vue en coupe du système, en position ouvert, pour alimenter un réservoir à niveau constant de chasse de WC,
- la figure 3 est une vue en coupe du système de la figure 2, en position fermé;
- la figure 4 est une vue en coupe du module d'obturation du dispositif régulateur du système de l'invention;
- la figure 5 est une vue en coupe du module à fentes du dispositif régulateur, le manchon mâle n'étant représenté qu'en demi-coupe et
- la figure 6 est une vue en coupe d'une variante de réalisation du module à fentes.

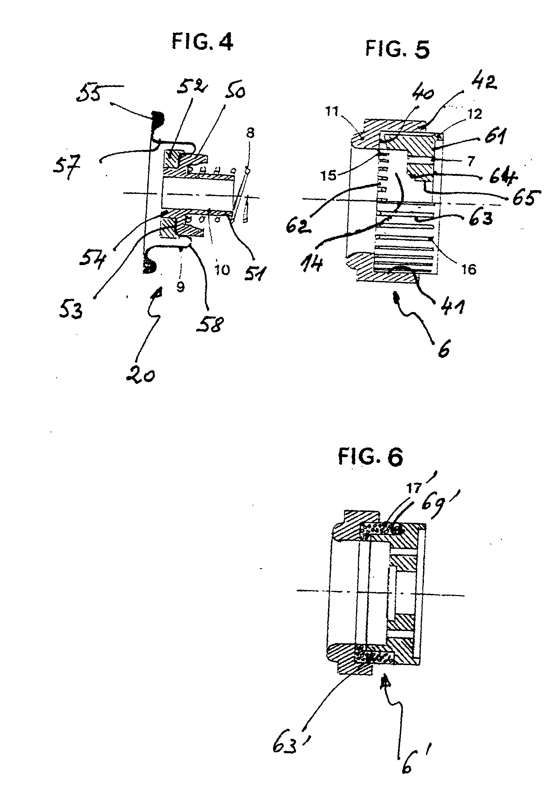

Le système de l'invention comporte un dispositif régulateur de débit comprenant un module d'admission d'eau femelle 6 à rainures latérales 16 de sortie d'eau et fentes radiales 15 de régulation, représenté sur la figure 5, et un module d'obturation mâle 20 représenté sur la figure 4.

Le module 6 comporte un manchon cylindrique mâle 12, dans lequel est ménagé un espace, ou compartiment, intérieur 14, dans lequel débouchent la pluralité de fentes radiales 15, qui s'étendent depuis le bord intérieur 62, et sur la paroi latérale externe 63 duquel sont ménagées l'autre pluralité de rainures latérales 16. Des orifices traversants axiaux 7 d'admission d'eau sont ménagés depuis la face externe 61 du manchon 12 pour déboucher dans le compartiment intérieur 14.

Le manchon 12 est monté dans une bague femelle 11 comportant un épaulement intérieur 40 recevant le bord intérieur 62 du manchon. La paroi intérieure 41 de la bague 11 forme, avec les rainures 16 du manchon, des fentes latérales qui s'étendent au-delà du bord extérieur 42 de la bague.

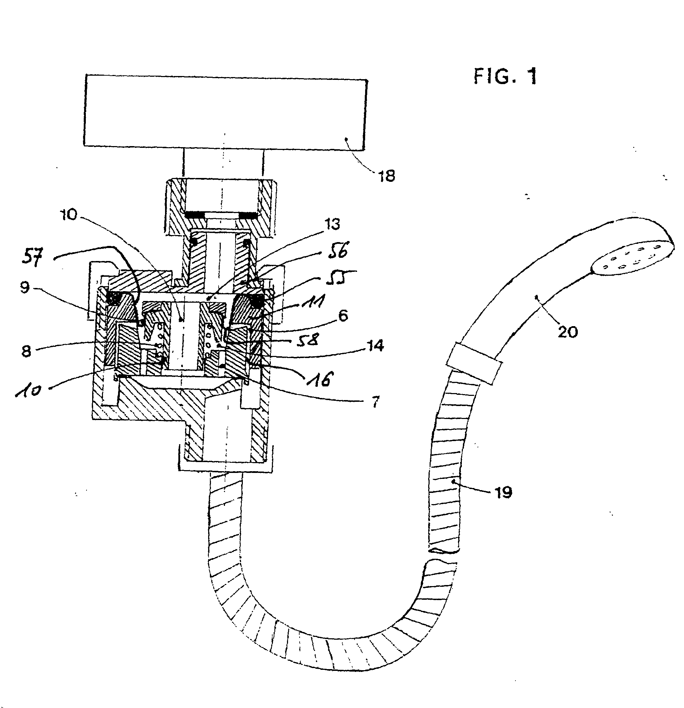

Le module d'obturation 20 comporte une portion de tube d'alimentation 10 depuis laquelle s'étend une petite jupe cylindrique 50 ouverte vers le module 6 et sur le fond de laquelle est logée l'une des extrémités d'un ressort de régulation taré 8, dont l'autre extrémité est agencée pour venir en appui contre un épaulement annulaire 64 du manchon 12, l'extrémité libre 51 de la portion de tube d'alimentation 10 étant destinée à coulisser dans un trou central 65 du manchon 12. Une bague 52 est montée sur l'autre extrémité 54 de la portion de tube d'alimentation 10, contre la jupe cylindrique 50, pour pincer le bord interne 53 de 1a membrane souple annulaire d'obturation 9, qui est une membrane à déroulement. Le bord externe de la membrane 9, ici en forme de bourrelet annulaire 55, est aussi pincé, après montage du système, entre la bague 11 du module 6 et la tête d'arrivée d'eau 56 (figure 1).

La membrane 9 est ici une toile en élastomère.

Le principe du fonctionnement va maintenant être expliqué, d'abord en référence à la figure 1 de l'installation de douche. Le système est monté sur un robinet ici mélangeur 18 et destiné à alimenter une poire de douche 20 par un tuyau flexible 19. L'eau, arrivant de la portion de tube d'alimentation 10 sur la face externe 61 du manchon 12 du module 6, à la pression du réseau, doit traverser les orifices traversants 7, les fentes radiales 15, puis, les fentes latérales 16, pour passer à une pression très faible en sortie du module 6. La membrane à déroulement 9 découvre plus ou moins les fentes radiales 15 du module 6 pour régler le débit d'alimentation en eau de la douche.

La membrane à déroulement 9 a un débattement tel qu'elle peut obturer complètement les fentes radiales 15, supprimant ainsi toute communication d'eau dans les fentes ou les ouvrir complètement pour un débit largement supérieur au débit utile des installations.

La section globale des orifices traversants d'admission 7 est déterminante pour la régulation du débit. Le ressort 8 a pour fonction d'appliquer une charge prédéterminée sur la membrane à déroulement 9.

En référence à l'installation de douche de la figure 1, en fonctionnement, l'eau arrive sur la face externe 57 de la membrane à déroulement 9, passe aussi par le tube d'alimentation 10 et par les orifices d'admission 7, pour arriver à l'intérieur du module 6, dans le compartiment intérieur 14 et sur la face interne 58 de la membrane à déroulement 9 ; l'eau passe ensuite par la partie des fentes découvertes par la membrane à déroulement 9.

La membrane à déroulement 9 réagit d'une part à l'effet de la pression d'eau du réseau sur sa face externe 57 et d'autre part à une pression d'eau pluis faible, due. à la perte de charge créée par le débit de l'eau à travers les orifices d'admission 7, sur sa face interne 58. Si le débit est plus important que le débit normal, la perte de charge à travers les orifices d'admission 7 augmente, la différence de pression agissant sur la membrane à déroulement 9 augmente et dépasse la charge du ressort 8, la membrane à déroulement 9 se déplace dans le sens d'obturation des fentes radiales 15 du module 6 et diminue ainsi le débit. Inversement, si le débit est plus faible que le débit normal, la perte de charge à travers les orifices d'admission 7 diminue, la différence de pression agissant sur la membrane à déroulement 9 diminue, la charge du ressort 8 devient prépondérante, la membrane à déroulement 9 se déplace dans le sens d'ouverture des fentes radiales 15 du module et augmente ainsi le débit. L'équilibre est défini pour un débit normalisé par la charge prédéterminée du ressort 8.

Dans ce cas d'alimentation de douche, l'arrêt ou la mise en service de l'installation sont commandés par le robinet mélangeur (ou le robinet thermostatique) prévu à cet effet.

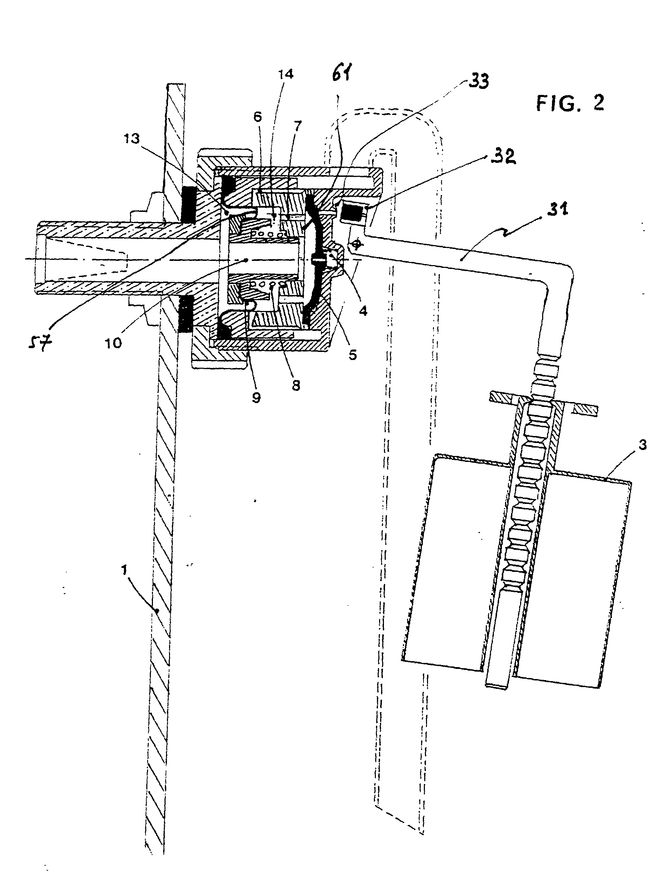

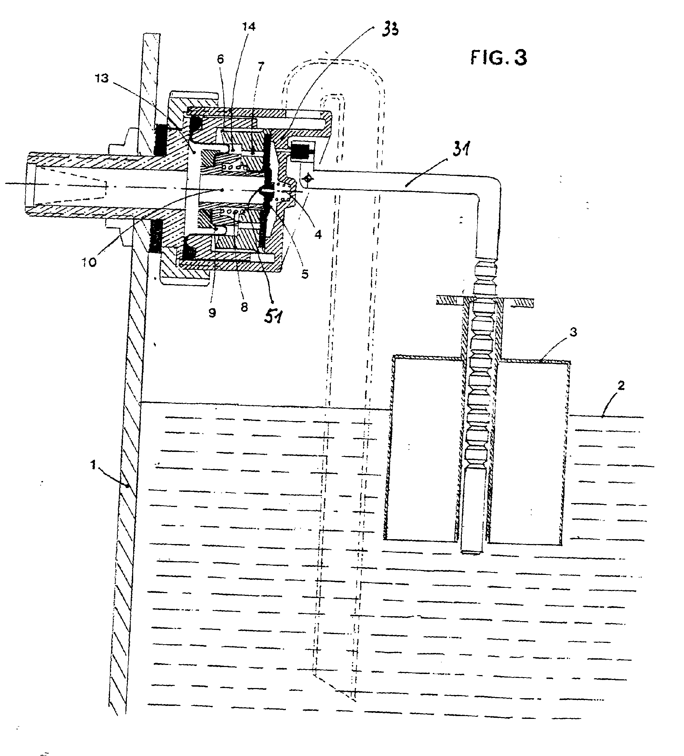

En référence aux figures 2 et 3, l'appareil est destiné à alimenter un réservoir à niveau constant pour une chasse de WC de paroi 1. L'appareil est commandé de façon connue par un flotteur 3 monté sur un levier 31, dont l'extrémité 32 vient obturer ou dégager une tuyère de mise à l'air libre 33.

Dans le cas représenté, le système d'obturation, de type connu, comporte une membrane souple 5 qui est normalement appliquée sur la face externe 61 du module à fentes 6 par la pression régnant dans la chambre 4 et créée à travers l'opercule central 51 de la membrane 5 qui met la chambre 4 en communication avec l'arrivée d'eau du réseau par le tube d'alimentation 10, le niveau d'eau 2 étant alors atteint (figure 3). Le levier 31 commandé par le flotteur 3 obture la tuyère de mise à l'air libre 33 du compartiment 4. Dans le cas où le niveau d'eau a baissé dans le réservoir (figure 2), le levier 31 et le flotteur 3 basculent et dégagent la tuyère de mise à l'air libre 33 et la pression chute dans la chambre 4. La membrane 5 se déplace pour laisser l'eau du tube d'alimentation 10 passer librement à travers les orifices d'admission 7.

Sur la surface active externe 57 de la membrane 9 agit, d'une part, la pression d'eau du réseau dans le compartiment extérieur 13 du côté extérieur de la membrane 9 et, d'autre part, la pression d'eau dans le compartiment intérieur 14. L'équilibre de cette membrane 9 en fonction d'une différence de pression choisie entre le compartiment 13 et le compartiment 14 est défini par la charge du ressort 8.

En fonction de cette différence de pression et du débit retenu pour le bon fonctionnement de l'installation, la section des orifices d'admission 7 est également définie.

La membrane 9 par son déroulement sur la face interne du module à fentes 6 obture plus ou moins l'entrée des fentes radiales 15 régulant ainsi le débit. Si le débit augmente, la perte de charge dans les orifices d'admission 7 augmente, la différence de pression entre les compartiments 13 et 14 augmente ; 1a membrane 9, déséquilibrée, ferme l'entrée des fentes radiales 15, ramenant le débit à sa valeur initiale. Inversement, si le débit diminue, la perte de charge dans les orifices d'admission 7 diminue, la différence de pression entre les compartiments 13 et 14 diminue, la membrane 9, déséquilibrée, ouvre l'entrée des fentes radiales ramenant le débit à sa valeur initiale.

Dans le cas d'alimentation du réservoir 1 à niveau constant de chasse de WC, l'arrêt et la mise en service de l'installation sont commandés par le flotteur 3 qui agit par l'intermédiaire de l'opercule 51 et de la tuyère 33 sur une membrane clapet 5. En position fermée, la membrane clapet 5 est plaquée sur la face externe 61 du module à fentes 6 et obture les orifices d'admission 7 ainsi que le tube d'alimentation 10. Dans cette position, la membrane à déroulement 9, soumise à la seule pression d'eau du réseau, sur sa face externe 57, est en butée sur le bord 62 du module à fentes 6 et obture les fentes radiales 15 du module.

La variante de réalisation de la figure 6 du module à fentes 6' se distingue de celle de la figure 5 par le fait que les rainures latérales sont supprimées et que la paroi externe latérale 63' du manchon à fentes 6' est rétrécie et présente un épaulement annulaire 69' pour recevoir une enveloppe tubulaire 17' en métal fritté.

Le système selon l'invention est aussi remarquable par le fait qu'il permet un écoulement silencieux par l'utilisation du module à fentes 6. Cette pièce comporte un grand nombre de fentes dans lesquelles l'eau perd la plus grande partie de sa pression. A l'entrée des fentes radiales 15, l'eau pénètre simultanément dans toutes les parties des fentes découvertes par la membrane à déroulement 9, communique après un changement de direction du courant d'eau dans les fentes latérales 16, après les fentes radiales 15, qui conduisent l'eau vers la sortie du module.

## Revendications

1. Système de régulation de débit pour installation de distribution d'eau, pour pallier les variations de pression du réseau d'alimentation en eau, comprenant un module d'admission d'eau (6) en communication avec une arrivée d'eau (10), avec des orifices d'admission (7) et des sorties d'eau (15), et des moyens d'obturation (20) avec une membrane à déroulement (9) agencée pour obturer de façon variable les sorties (15) du module d'admission (6), les moyens d'obturation (20) étant agencés pour que la membrane à déroulement (9) soit soumise, d'un côté (57), à la pression d'arrivée d'eau et, de l'autre côté (58, 14), à la pression d'eau régnant à l'intérieur du module d'admission (6) entre les orifices d'admission (7) et les sorties d'eau (15), d'une part, et à des moyens de rappel élastique tarés et de régulation (8), d'autre part, **caractérisé par le fait que** le module d'admission (6) est fixe dans le système, la membrane d'enroulement (9) est solidaire d'une tête d'arrivée d'eau (56) et d'un module d'obturation (20) monté mobile sous l'action des moyens de rappel (8) et le module d'admission (6) comporte des fentes radiales (15) de sortie d'eau obturables par la membrane (9).

2. Système selon la revendication 1, dans lequel le module d'admission (6) est un module femelle dans lequel est monté mobile le module femelle d'obturation (20).

3. Système selon l'une des revendications 1 et 2, dans lequel le module d'admission (6) comporte un manchon mâle (12) monté dans une bague femelle (11) entre lesquels sont ménagées des fentes latérales de sortie d'eau (16).

4. Système selon la revendication 3, dans lequel les orifices traversant axiaux d'admission (7) du module d'admission (6) sont ménagés depuis la face externe (61) du manchon (12) et les fentes radiales (15) s'étendent depuis le bord intérieur (62) du manchon (12).

5. Système selon l'une des revendications 1 à 4, dans lequel le module d'obturation (20) comporte une portion de tube d'alimentation (10) depuis lequel s'étend une jupe cylindrique (50) de réception d'un ressort de rappel taré de régulation (8) en appui contre le module d'admission (6).

6. Système selon la revendication 5, dans lequel il est prévu une bague (52) montée sur la portion de tube d'alimentation (10) contre la jupe (50) de réception du ressort (8) et le bord interne (53) de la membrane à enroulement (9) est pincé entre la bague (52) et la jupe (50).

7. Système selon la revendication 6, dans lequel la membrane à enroulement (9) comporte un bord externe (55) pincé entre la bague femelle (11) du module d'admission (6) et la tête d'arrivée d'eau (56).

8. Système selon l'une des revendications 1 et 2, dans lequel le module d'admission (6) comporte un manchon mâle (12) monté dans une bague femelle (11) entre lesquels est disposée une enveloppe tubulaire (17) en métal fritté.

9. Système selon l'une des revendications 1 à 8, dans lequel le courant d'eau subit un changement de direction après les sorties d'eau (15) du module d'admission (6).

10. Système selon l'une des revendications 1 à 9, destiné à alimenter une douche (20).

11. Système selon l'une des revendications 1 à 9, destiné à alimenter un réservoir de chasse d'eau (1, 3).
